# EUROPEAN PATENT APPLICATION

(11) **EP 2 749 770 A1**
(43) Date of publication of application: **02.07.2014**
(21) Application number: 13197366.1
(22) Date of filing: 16.12.2013
(51) Int. Cl.: F04B 49/06

(54) **Apparatus for controlling the flow-rate of liquid of an electric pump and the temperature of the control and actuation electronics of a pumping device that carries the electric pump**

(30) Priority: 27.12.2012 IT PD20120409
(71) Applicant: Dab Pumps S.p.A., 35035 Mestrino (Padova) (IT)
(72) Inventor: Tazioli, Stefano, 57016 Rosignano Marittimo, Località Gabbro LI (IT); Sinico, Francesco, 36075 Montecchio Maggiore VI (IT)
(74) Representative: Modiano, Micaela Nadia

(57) **Abstract**

An apparatus (10) for controlling the flow-rate of liquid of an electric pump and the temperature of the control and actuation electronics of a pumping device that carries the electric pump, the apparatus (10) comprising, on a single monolithic segment (11) of delivery duct, flow-rate detection means (12) and a heat sink (14) for a control and actuation unit (13), which is provided with temperature detection means (15), the heat sink (14) having a wet side (16) that is exposed to the liquid and a dry side (17) that is sealed from the liquid, with which the control and actuation unit (13) is associated.

## Description

The present invention relates to an apparatus for controlling the flow-rate of liquid of an electric pump and the temperature of the control and actuation electronics of a pumping device that carries the electric pump.

As is known, a hydraulic pumping system is provided with a pump body to which the intake and delivery ducts are connected, and typically on the side of the delivery duct a flowmeter is installed which is capable of detecting the presence of flow and, in combination with a pressure-controlled switch and an electronic board, of switching the pump on and off automatically.

However, very often the need is felt to monitor in real time the values of pressure and flow-rate as well.

For this purpose, a pressure transducer, preferably an electronic one, in order to know the spot value of the delivery pressure, and a flowmeter, in order to know the value of the flow rate, are used often.

It is also important to detect the temperature of the control and actuation electronics in order to prevent an excessive rise of the temperature of sensitive parts from compromising its functionality and also to prevent, on the contrary, an excessive drop of the temperature of the operating environment from causing the freezing of the liquid that is present inside the system.

The problem of temperature increase is often solved by means of fan-type cooling systems, which as is known are bulky and noisy.

Furthermore, an inconvenient space occupation is caused by the division of the delivery duct into segments that carry these systems for flow-rate measurement and temperature control, which must be connected by means of adapted connectors.

The aim of the present invention is to provide a control apparatus to be installed on the delivery of liquid of an electric pump that is compact and capable of detecting the values of flow-rate of the fluid and of controlling the temperature of the control and actuation electronics of a pumping device.

Within this aim, an object of the invention is to provide an apparatus that is quieter than the ones currently often used.

Another object of the invention is to devise an apparatus for controlling the flow-rate of liquid of an electric pump and the temperature of the control and actuation electronics of a pumping device that carries the electric pump, characterized in that it comprises, on a single monolithic segment of delivery duct:
- flow-rate detection means,
- a heat sink for a control and actuation unit, which is provided with temperature detection means, said heat sink having a wet side that is exposed to the liquid and a dry side that is sealed from the liquid, with which said control and actuation unit is associated.

Further characteristics and advantages of the invention will become better apparent from the description of a preferred but not exclusive embodiment of the apparatus according to the invention, illustrated by way of nonlimiting example in the accompanying drawings, wherein:
Figure 1 is a perspective view of the apparatus according to the invention;
Figure 2 is another exploded perspective view of the apparatus according to the invention;

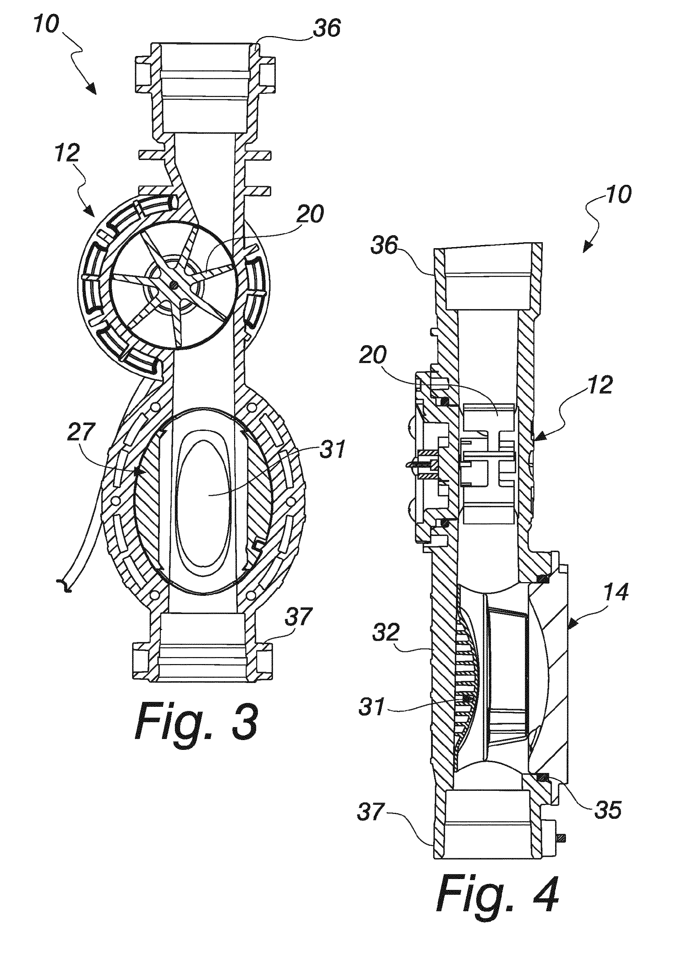

Figure 3 is a sectional view of the apparatus according to the invention;
Figure 4 is another sectional view of the apparatus according to the invention;
Figure 5 is a sectional view of the apparatus at the heat sink, and associated with the control and actuation unit.

With reference to the figures, the apparatus according to the invention, generally designated by the reference numeral 10, is provided for the control of the flow-rate of liquid of an electric pump and for the control of the temperature of a control and actuation unit 13 of a pumping device that carries the electric pump and is not shown.

The apparatus 10 comprises, on a single monolithic segment 11 of delivery duct, preferably made of plastic material, flow-rate detection means 12 and a heat sink 14 for the control and actuation unit 13, of a known type and provided with temperature detection means 15.

The heat sink 14 has a wet side 16 that is exposed to the liquid and a dry side 17 that is sealed from the liquid and with which the control and actuation unit 13 is associated.

The flow-rate detection means 12 are part of a first portion 18 of the monolithic segment 11 of the delivery duct and comprise a flowmeter 19 with a rotating fan 20, which is closed with a cover 21 that is appropriately fixed by means of first screws 22, and means 23 for transporting data to an external device for the control and actuation of the pumping device.

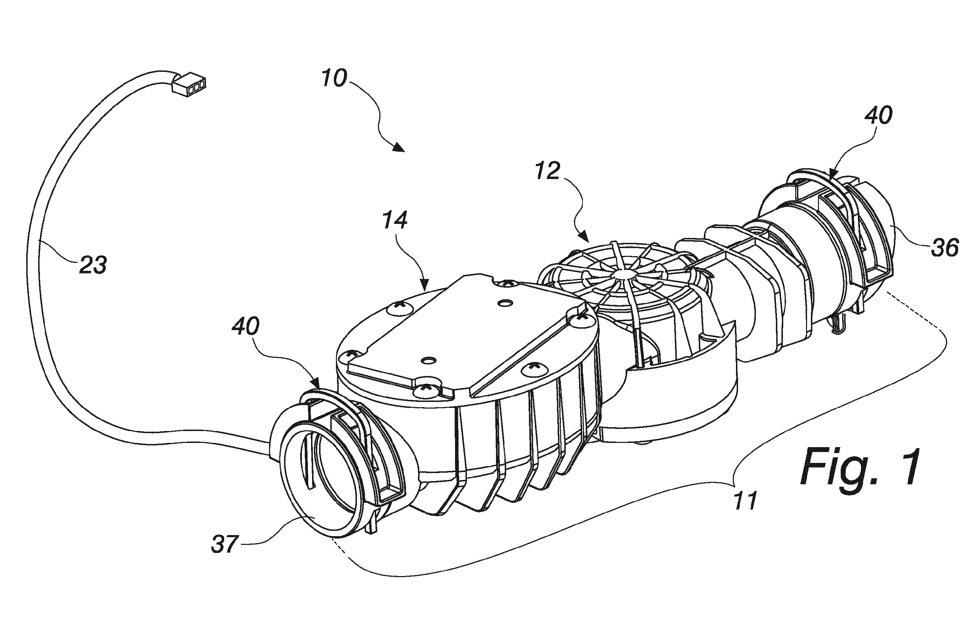

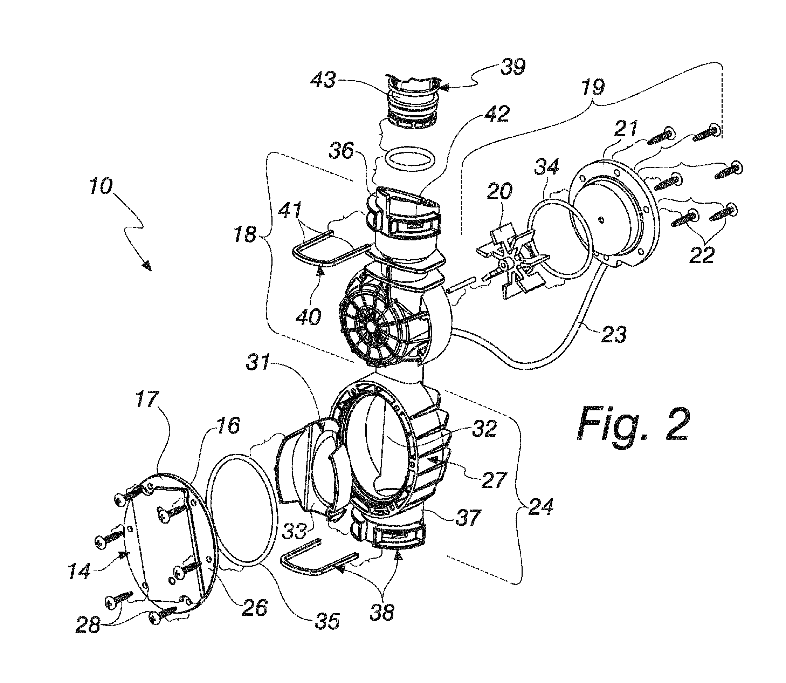

More particularly, the data transport means 23 consist of a signal cable, shown in Figures 1 and 2, which connects the flowmeter 19, more particularly a Hall sensor thereof, to the external control and actuation device.

As regards instead the heat sink 14, it is fitted on a second portion 24 of the monolithic segment 11 and the control and actuation unit 13 is associated therewith and provided with the temperature detection means 15, which consist substantially of a temperature sensor designed to provide the value of the temperature of said control and actuation unit 13 when the pump is operating or of the surrounding environment when the pump is off. The temperature detection means 15 are associated with an external control and actuation device.

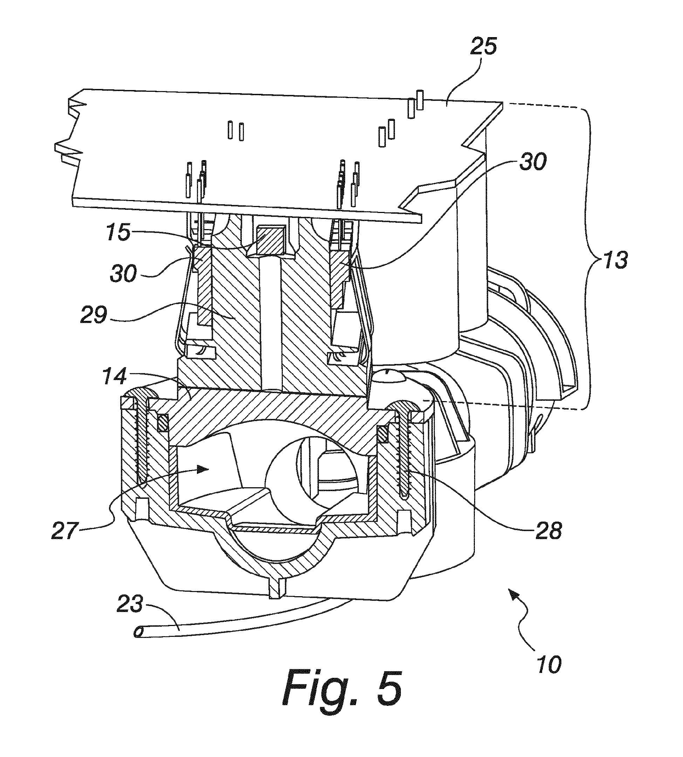

Such external device is designated by the reference numeral 25 in Figure 5 and consists substantially of an electronic board, which can be the same device to which the flowmeter 19 is connected by means of the signal cable and is part of the control and actuation unit 13.

The heat sink 14 consists substantially of a first wall 26, which is metallic and preferably made of brass and closes a chamber 27 for the passage of the delivery liquid, which lies on the second portion 24, by means of second screws 28 or, as an alternative, with other fixing means.

In particular, observing Figure 5 again, it can be seen that what has been described as a control and actuation unit 13, which substantially is not new in itself, comprises another heat sink 29, made of aluminum, which is not placed in contact with the water (as occurs instead for the main heat sink 14), and accommodates the temperature detection means 15, i.e., the temperature sensor, and is interposed between the heat sink 14, on the dry side 17, and the electronic board, in order to dissipate by conduction the heat from the board to the heat sink 14, which is in contact with the colder water of the delivery on the wet side 16.

In particular, transistors 30 to be cooled are mounted directly on the aluminum heat sink and are connected to the electronic board by way of adapted connections.

The chamber 27 for the passage of the delivery liquid is provided internally with a baffle 31 for diverting the flow toward the wet side 16 of the heat sink 14. In particular, the deflector 31, clearly visible in the exploded view of Figure 2, consists of an insert to be arranged within the passage chamber 27. More particularly, it is applied against the second wall 32 of the passage chamber 27, which is opposite the first wall 26, is shaped complementarily thereto, following on one side the tubular shape of the duct that is repeated in the passage chamber 27, and has a convex portion 33, substantially a dome, on the side of the liquid, in order to divert its flow toward the first wall 26.

The flow rate detection means 12 and the heat sink 14 are arranged in succession with respect to each other and therefore the liquid that exits from the flowmeter then passes through the passage chamber 27.

The apparatus 10 is conveniently provided with gaskets for the association of parts in contact with the water, such as a first O-ring 34 to close the flowmeter 19 with the cover 21 and a second O-ring 35 to close with the first wall 26 the passage chamber 27.

Advantageously, the monolithic segment 11 is provided at its end portions, the first one 36 and the second one 37, with means 38 for quick and reversible connection respectively to a segment of pipe 39 that carries the liquid in output from the electric pump and to another delivery duct segment, which is not shown and preferably carries a one-way valve.

By way of example, a segment of pipe 39 is in fact shown in Figure 2 in order to illustrate the connection to the monolithic segment 11; such connection is similar for the other delivery portion, although it is not shown.

As clearly visible in Figure 2, the quick and reversible connection means 38 comprise a U-shaped bracket 40, which is inserted with two parallel arms 41 in corresponding windows 42 provided in the first end portion 36 (and in a similar manner on the second end portion 37) to enter also laterally a groove 43 of the segment of pipe 39, preventing its extraction.

The measurement system can be completed with a pressure transducer to be installed again on the delivery, downstream of the monolithic segment 11.

Operation of the apparatus according to the invention is as follows.

The monolithic segment 11 of the delivery duct, connected by means of its end portions, the first one 36 and the second one 37, respectively to the pipe segment 39 and to the other segment of the delivery duct, by means of the quick and reversible connection means 38, is crossed by the liquid that is pumped by the electric pump.

In the passage through the first portion 18, the flow of liquid passes through the flowmeter 19, turning its rotating fan 20, the rotation rate of which, which corresponds to a flow-rate value, is detected by the Hall sensor and the signal is carried by means of the data transport means 23, i.e., the signal cable, to the external device (optionally 25, i.e., the electronic board) for the control and actuation of the pumping device that controls the electric pump.

In succession, the flow of liquid passes through the second portion 24, where it is forced by the baffle 31 toward the wet side 16 of the heat sink 14.

Here the liquid in contact with the first wall 26, made of brass, cools by conduction the control and actuation unit 13 and therefore the electronic board and in particular the transistors 30.

The value of the surrounding temperature is controlled by the temperature sensor, which provides it to the external device 25.

The latter, in case of overheating, can actuates the shutdown of the electric pump and, if provided in software, can also control its power-on in order to heat the liquid if instead its temperature drops until it is close to the freezing temperature.

For maintenance interventions it is possible to remove the monolithic segment 11 from the delivery duct of the system: it is sufficient to remove the U-shaped bracket 40, extracting it from the windows 42, and to extract the segment of pipe 39 and the other segment of the delivery duct respectively from the first end portion 36 and from the second end portion 37.

These connectors are obviously advantageous, not only because they allow to perform maintenance operations rapidly but also because they help to reduce significantly the space occupation of the apparatus.

It should also be noted that the choice to cool the electronics by conduction, using the passage of the liquid inside the monolithic segment 11

(instead of fan cooling), also helps to contain the overall space occupation of the pumping device in which the apparatus can be installed.

In practice it has been found that the invention achieves the intended aim and objects, providing an apparatus that is compact and which, with a single monolithic duct segment, is capable of measuring the flow-rate of liquid and of controlling the temperature of the control and actuation unit (in particular of its electronic parts) of the pumping device when the pump is on. Such pump is in fact well-suited to be installed inside compact pumping devices, occupying a minimal space thereof.

Another advantage is that it is possible to control also the temperature of the surrounding environment when the pump is off, in order to prevent the freezing of the liquid inside the ducts in case of excessive cooling.

It is therefore capable of protecting the device both from damage that can be caused by excessive temperature of the electronics and by the freezing of the liquid.

Moreover, the apparatus is easy to install on the delivery of the electric pump by way of the quick and reversible connection means, which furthermore facilitate disassembly operations for any maintenance on the pumping device.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2012A000409 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for controlling the flow-rate of liquid of an electric pump and the temperature of the control and actuation electronics of a pumping device that carries the electric pump, **characterized in that** it comprises, on a single monolithic segment (11) of delivery duct:
- flow-rate detection means (12),
- a heat sink (14) for a control and actuation unit (13), which is provided with temperature detection means (15), said heat sink (14) having a wet side (16) that is exposed to the liquid and a dry side (17) that is sealed from the liquid, with which said control and actuation unit (13) is associated.

2. The apparatus according to claim 1, **characterized in that** said flow-rate detection means (12) are part of a first portion (18) of said monolithic segment (11) and comprise a flowmeter (19) with a rotating fan (20) and means (23) for transporting data to an external device for control and actuation of the pumping device.

3. The apparatus according to claim 1, **characterized in that** said heat sink (14) is mounted on a second portion (24) of said monolithic segment (11) and said control and actuation unit (13) is associated therewith and provided with said temperature detection means (15), which consist substantially of a temperature sensor and are associated with an external device (25) for the control and actuation of the pumping device, which belongs to said control and actuation unit (13).

4. The apparatus according to claim 3, **characterized in that** said heat sink (14) consists substantially of a first wall (26) that closes a liquid passage chamber (27) that is extended on said second portion (24), said control and actuation unit (13) being associated with said first wall (26) on the dry side (17) sealed from the liquid.

5. The apparatus according to claim 4, **characterized in that** said delivery liquid passage chamber (27) is provided internally with a baffle (31) for diverting the flow toward the wet side (16) of said heat sink (14).

6. The apparatus according to claim 1, **characterized in that** said monolithic portion (11) is provided, at its first end portion (36) and second end portion (37), with means (38) for quick and reversible connection respectively to a segment of pipe (39) that carries the liquid in output from said electric pump and to another segment of delivery duct.
